# FASCICULE DE BREVET EUROPEEN

(11) **EP 2 788 643 B1**
(45) Date de publication et mention de la délivrance du brevet: **14.09.2016**
(21) Numéro de dépôt: 12810363.7
(22) Date de dépôt: 06.12.2012
(51) Int. Cl.: F16L 1/16, F16L 1/20

(54) **ENSEMBLE POUR LE TRANSPORT DE LIQUIDE PAR TUYAUTERIE ET STRUCTURE FLOTTANTE ASSOCIEE**
ANORDNUNG ZUM FLUIDTRANSPORT DURCH EINE ROHRLEITUNG UND ZUGEHÖRIGE SCHWIMMENDE STRUKTUR
ASSEMBLY FOR THE TRANSPORT OF FLUID THROUGH A PIPELINE AND ASSOCIATED FLOATING STRUCTURE

(30) Priorité: 07.12.2011 FR 1161294
(43) Date de publication de la demande: 15.10.2014
(73) Titulaire: Via Marina, 92851 Rueil Malmaison (FR)
(72) Inventeur: LEBELLE, Claude, F-78290 Croissy sur Seine (FR)
(74) Mandataire: Novagraaf Technologies
(86) Numéro de dépôt international: PCT/FR2012/052825
(87) Numéro de publication internationale: WO 2013/083926

(56) Documents cités:
- FR-A- 1 417 987
- FR-A1- 2 786 246
- US-A1- 2004 112 452
- Via Marina: "Via Marina: a high-performance and low-cost water transportation system", , 2010, XP002681859, Extrait de l'Internet: URL:http://2012.thewaterchannel.tv/hn/vide os/categories/viewvideo/1202/drinking-wate r-supply/via-marina-a-high-performance-and -low-cost-water-transportation-system [extrait le 2012-08-15]
- Félix Bogliolo: "Transportation of fresh water in large quantities and over long distances by underwater flexible pipeline", , 27 février 2009 (2009-02-27), pages 1-4, XP055035510, Extrait de l'Internet: URL:http://www.semide.net/media_server/fil es/N/7/via-marina_presentation.pdf [extrait le 2012-08-14]
- ANONYMOUS: 'Submariver. Transportation of water in large quantities and over long distances by underwater flexible pipe', [en ligne] 01 Janvier 2010, XP054975713 Extrait de l'Internet: <URL:http://www.via-marina.com/fr/film.php? lang=gb> [extrait le 2015-04-21]

## Description

L'invention concerne l'installation sous-marine d'un tuyau de transport de liquide, typiquement de l'eau douce.

Il s'agit en particulier d'un ensemble comprenant le tuyau à poser et le dispositif de pose sur un site d'un tel tuyau, typiquement utilisable pour transporter de l'eau douce sur plusieurs centaines (voire davantage) de kms, ce tuyau étant flexible et ayant une section déformable.

Un tel tuyau de transport peut être installé sur un fond marin, à une profondeur qui peut être de 200 m.

Le tuyau peut :
- être disposé entre un point d'expédition de l'eau douce situé à terre et être relié par un segment remontant depuis la profondeur de pose immergée jusqu'à la côte,
- être protégé par un ouvrage d'atterrage,
- et être connecté à l'unité de pompe d'expédition située à terre.

A l'autre extrémité, le tuyau peut être relié à la côte par un ouvrage d'atterrage similaire dans son principe à celui décrit pour la première extrémité et connecté à une installation de réception de l'eau douce.

Des cheminées d'équilibrage situées à chaque extrémité du tuyau, installées à terre permettent d'absorber les à-coups éventuels de pression (« coups de bélier »), qui pourraient se produire en cours d'exploitation.

Des installations de prétraitement situées en amont de l'unité de pompe d'expédition peuvent permettre de rendre l'eau douce transportable.

Des installations de traitement situées en aval des installations de réception permettent de rendre cette eau propre à l'usage auquel elle est destinée.

C'est donc dans ce cadre que l'invention peut s'inscrire.

Un problème dans ce cadre concerne la manière de concevoir le tuyau et son dispositif de pose pour rendre pratique, relativement rapide et fiable cette pose, de façon que la pose permette au tuyau d'être rapidement opérationnel (transport du liquide) une fois posé.

Pour apporter une solution favorable à la prise en compte d'une partie au moins de cette problématique, il est proposé que l'ensemble concerné comprenne :
- ledit tuyau de transport de liquide, ce tuyau présentant un axe longitudinal et étant :
   * flexible,
   * déformable entre une section interne circulaire et une section interne aplatie qui peut être nulle,
   * pliable sur lui-même longitudinalement suivant un ruban aplati (pouvant présenter, à l'endroit des pliures, un rayon de courbure inférieur à 10% (de préférence 5%) du diamètre de sa section interne circulaire) et,
- un dispositif de pose, sur site, dudit tuyau, le dispositif de pose présentant un axe longitudinal et comprenant :
   * un touret rotatif autour duquel est enroulé un premier tronçon de tuyau, dans un état aplati de sa section,
   * un dévidoir motorisé pour dérouler le tuyau,
   * des moyens de présentation pour présenter l'un en face de l'autre, dans un état communément conformé, moins aplati de leur section que sur le touret
   , le premier tronçon de tuyau issu du touret et un second tronçon situé en aval du premier en référence au sens de pose du tuyau,
   * des moyens d'assemblage pour une liaison étanche à l'eau entre les premier et second tronçons de tuyau dans l'état communément conformé, et obtenir ledit tuyau allongé,
   * et, optionnellement, des moyens de tensionnement pour transmettre au tuyau allongé une tension axiale d'avance vers l'aval et/où de recul vers l'amont.

Un problème corollaire concerne la manière d'utiliser le caractère flexible, déformable et donc pliable du tuyau pour tendre vers une solution performante à la problématique ci-avant, notamment dans le cadre de la liaison de ces tronçons.

Pour cela, il est proposé que les moyens précités de présentation comprennent des moyens de conformation des premier et second tronçons de tuyau, ces moyens de conformation présentant, en amont et en aval des moyens d'assemblage, des sections qui respectivement augmentent et diminuent de l'amont vers l'aval le long de l'axe longitudinal du dispositif de pose, ces sections étant suivies par lesdits premier et second tronçons de tuyau, quand ceux-ci passent autour et le long d'elles.

Ainsi, on pourra, par une circulation du tuyau le long d'un conformateur interne (dénommé ci-avant « les moyens de conformation ») obtenir une déformation spontanée du tuyau qui épousera la forme de la surface extérieure de ce conformateur.

Un autre problème corollaire concerne la manière de concevoir le touret et de conformer le tuyau pour tendre vers une solution performante à la problématique ci-avant.

Pour cela, il est proposé que :
- que le touret présente une largeur orientée perpendiculairement à l'axe longitudinal du tuyau, cette largeur étant supérieure au demi-périmètre du tuyau dans un état circulaire de la section de ce tuyau, et le tuyau est enroulé autour du touret, à plat ou dans un état immédiatement proche d'un tel état à plat, non replié sur lui-même, perpendiculairement à son axe longitudinal, ou bien,
- que le touret présente une largeur orientée perpendiculairement à l'axe longitudinal du tuyau, cette largeur étant inférieure au demi-périmètre du tuyau dans un état circulaire de la section de ce tuyau,
- et que le tuyau soit enroulé à plat, replié sur lui-même perpendiculairement à son axe longitudinal autour du touret. En section, le tuyau peut alors avoir sensiblement la forme d'un C écrasé.

Un tuyau monobloc paraissant difficile à utiliser, et la liaison entre tronçons de tuyau étant délicate à maîtriser sur une pose assez rapide et qui doit assurer une étanchéité (au liquide à transporter) sans faille, aux jonctions de ces tronçons, avec un tuyau qui est à un moment plat, ou proche d'une telle section aplatie, et à un autre mis au rond ou proche de cet état en section, on recommande que les moyens de présentation comprennent :
- un premier élément destiné à être reçu à l'intérieur des premier et second tronçons de tuyau, via leurs extrémités libres respectives,
- un second élément creux disposé autour du premier élément, de sorte que lesdits premier et second tronçons de tuyau puissent être interposés, suivant l'axe longitudinal du tuyau, entre les premier et second éléments.

Pour favoriser la mise en forme adéquate du tuyau, on recommande que les moyens de présentation comprennent :
- un premier élément destiné à être reçu à l'intérieur des premier et second tronçons de tuyau, via leurs extrémités libres respectives,
- un second élément creux (extérieur) disposé autour du premier élément, de sorte que lesdits premier et second tronçons de tuyau puissent être interposés, suivant l'axe longitudinal du tuyau, entre les premier et second éléments, l'un au moins de ces premier et second éléments comportant des premiers et seconds moyens d'entraînement situés pour partie en amont et pour partie en aval des extrémités libres à assembler (a priori abouter) desdits premier et second tronçons de tuyau, pour entraîner le premier ou second tronçon de tuyau selon l'axe longitudinal du tuyau, la partie amont des premiers et/ou seconds moyens d'entraînement étant adaptée à entraîner temporairement le premier tronçon de tuyau, selon ledit axe longitudinal, sur une distance prédéterminée, vers le second tronçon de tuyau, ou inversement, via ladite partie aval vers le premier tronçon de tuyau.

Et pour ce même souci d'efficacité et de sécurité (en évitant d'étirer exagérément le tuyau), on recommande par ailleurs que les seconds moyens d'entraînement sont reliés à des moyens de commande pour :
- alors que les premier et second tronçons de tuyau ne sont pas encore assemblés, inactiver la partie aval des premiers et/ou seconds moyens d'entraînement vis-à-vis de l'entraînement dudit second tronçon de tuyau, et,
- lorsque les premier et second tronçons de tuyau sont aboutés par les moyens d'assemblage, activer la partie amont et/ou la partie aval des premiers et/ou seconds moyens d'entraînement vis-à-vis de l'entraînement desdits tronçons de tuyau assemblés.

Ainsi, on pourra assembler les tronçons de tuyaux alors que leurs sections sont dans un état communément conformé de leur section, au moins relativement arrondi.

Pour gérer la pose effective du tuyau en aval des moyens de tensionnement, s'ils sont prévus, ou des moyens d'assemblage, et typiquement entraîner le tuyau vers le bas, en direction du site de pose, alors que l'ensemble précité est situé à un niveau d'élévation supérieur à celui du site, deux solutions sont proposées qui comprennent :
- soit un treuil pour amplifier ladite tension axiale, au moins pour l'avance du tuyau, en aval du treuil, et où passe ce tuyau avec sa section interne aplatie ou immédiatement proche,
- soit un système de lestage qui est fondrier dans l'eau et qui:
   -- soit est lié à des moyens d'attache, au tuyau, dudit système de lestage,
   -- soit est monobloc avec le tuyau.

Si on utilise un treuil, pour favoriser une application contrôlée des efforts sur le tuyau, tout en favorisant une pose assez rapide et fiable, on recommande que le treuil soit à effet de cabestan et comprenne ainsi plusieurs rouleaux motorisés (de préférence chacun à axe horizontal), chacun pour la transmission d'une partie de la tension axiale, et autour desquels passe, sans tour complet (angle inférieur à 2pi radian), le tuyau allongé avec sa section aplatie ou immédiatement proche (section interne pouvant donc être nulle ou immédiatement proche de zéro).

En concordance avec la définition usuelle dans les canalisations sous-marines, sera ici « fondrier » notamment un moyen, tel un lest, qui, dans un volume de fluide, entraîne ou maintient vers le bas de ce volume un élément lié à ce moyen.

Avec un système de lestage fondrier, pour favoriser l'entraînement contrôlée du tuyau vers le bas (le fond de l'eau s'il s'agit d'un site immergé), on recommande que le système de lestage comprenne une enveloppe de lestage, flexible, contenant, sans mélange avec le liquide à transporter, un matériau pesant de masse volumique supérieure à celle de l'eau de mer, l'assemblage, immergé dans un fluide ayant des mouvements non stationnaires, tendant ainsi à reposer sur le fond (80) de la zone d'immersion.

Un matériau granulaire sera pratique à utiliser et facile à trouver et à transporter.

Pour une pose immergée, et alors permettre au tuyau immergé d'osciller par rapport au système de lestage, en fonction de mouvements non stationnaires du fluide d'immersion, alors que la masse du système de lestage pourvu de son lest maintient celui-ci essentiellement fixe, on conseille que le système de lestage soit pourvu d'un lest et que les moyens d'attache comprennent une liaison souple.

Pour favoriser une pose rapide et fonctionnelle du tuyau, y compris en mer, malgré les mouvements du fluide au sein duquel il est posé, tels ceux de la houle et/ou des courants, avec des risques limités d'endommagement lors de sa pose ou plus tard, une fois posé, on propose aussi de prévoir des moyens d'apport d'un matériau granulaire, en tant que lest. il est alors conseillé que ces moyens d'apport (qui descendront dans le fluide d'immersion) présentent une ouverture de déversement du matériau granulaire, vers le fond, ou au fond, du fluide où le tuyau est immergé, dans et au contact de l'enveloppe de lestage.

Des caractéristiques, préférées en ce qu'elles peuvent compléter utilement la qualité de la proposition ci-dessus, sont encore prévues plus loin dans la description.

Outre le dispositif ci-avant est également concernée une structure flottante comprenant ce dispositif alors disposé sur un pont de cette structure.

Pour favoriser la rapidité recherchée de la pose et l'ergonomie des manoeuvres, il est proposé que :
- que le touret tourne autour d'un axe horizontal,
- que le touret soit mobile sur le pont, transversalement à l'axe longitudinal du tuyau, et soit monté de façon amovible sur ce pont,
- et qu'une grue, pour le grutage de tourets, soit disposée sur le pont, plus près d'un premier bord de la structure flottante que d'un second bord opposé au premier du côté duquel un deuxième touret rotatif autour duquel est enroulé un troisième tronçon de tuyau peut être gruté sur le pont via ladite grue.

On recommande une pose du tuyau par le tableau arrière d'un navire motorisé, à positionnement dynamique.

Par ailleurs, pour immerger le tuyau dans l'eau, et le maintenir sur ou vers le fond du site d'immersion, au fur et à mesure que ce tuyau est immergé sous tension derrière la structure flottante qui se déplace alors en surface et à laquelle il est relié par ledit ensemble, on recommande, que la structure flottante comprenne:
- des moyens de déplacement pour naviguer, et
- des moyens d'apport de lest permettant d'apporter un tel lest au système de lestage, sur ou vers ledit fond d'immersion, où une première partie du tuyau et du système de lestage dont il est pourvu est déjà maintenue, par du lest déjà présent dans cette première partie du système de lestage.

Le procédé de pose qui lui correspond est également considéré ici comme innovant.

Des caractéristiques et avantages vont encore être présentés ci-après, en référence à la description d'un mode de réalisation qu'illustrent schématiquement des dessins où :
- la figure 1 montre de côté une structure flottante de pose, ici un navire à positionnement dynamique,
- la figure 2 montre l'arrière du navire et le tuyau posé en fond de mer,
- la figure 3 montre un touret opérationnel et le dispositif conformateur, en aval,
- la figure 4 montre de dessus le navire de pose et les navires/barges d'approvisionnement et de récupération,
- les figures 5a,5b montrent un touret et son environnement opérationnel, de côté puis de face (flèche V),
- les figures 6a,6b montrent deux manières possible de placer le tronçon concerné de tuyau autour du touret,
- les figures 7a,7b,7c,7d,7e montrent des détails du dispositif conformateur (parties amont et aval), de même pour la figure 8 (pour la partie intermédiaire) et la figure 9 (partie aval),
- la figure 10 montre l'arrière du pont du navire : moyens de tensionnement, treuil, puis moyens de pose des lests et rouleau arrière en débord axial pour le départ de pose du tuyau lesté,
- la figure 11 montre un navire ou une barge d'approvisionnement ou de récupération, au port,
- la figure 12 montre plusieurs tourets en travers du pont, de manière que celui au centre soit opérationnel (il se dévide), celui du haut, plein, soit en attente, et celui du bas, vide de tuyau, soit prêt à être évacué hors du navire de pose,
- la figure 13 montre la possible adjonction d'un dispositif pour assurer une compensation au pilonnement et/ou au cavalement, en mer,
- la figure 14 montre une variante de la figure 1, en termes de solution de pose,
- la figure 15 montre, en coupe transversale à l'axe longitudinal (coupe XV-XV), une liaison souple, à absorption d'efforts, entre un tuyau et son système de lestage disposé à côté,
- la figure 16 montre un tuyau monobloc avec son système de lestage, respectivement en coupe transversale à son axe longitudinal, et
- les figures 17,18 montrent deux solutions possibles pour apporter du lest en fond de zone d'immersion, par exemple dans le cadre de la solution de la figure 14.

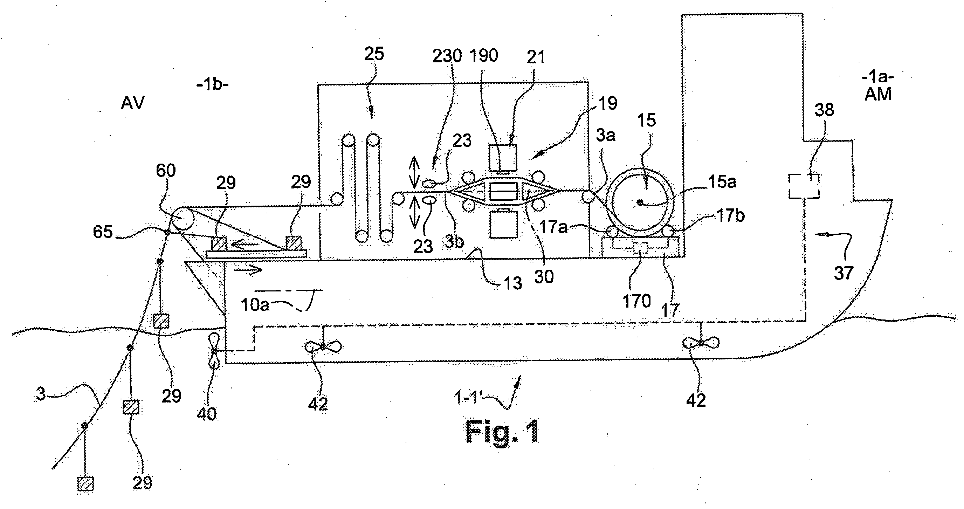

Figure 1 notamment, on voit une structure flottante 1 comprenant un dispositif 10 de pose sur un site 11 d'un tuyau allongé 3 de transport de liquide disposé sur un pont 13 de la structure flottante 1.

Le dispositif de pose 10 permet de poser en fond marin (à plusieurs centaines de mètres, loin des côtes, par exemple entre deux régions du monde) un tuyau de transport de liquide, a priori de l'eau douce destinée à être bue (après traitement de purification, ne serait-ce que pour un maximum de sécurité alimentaire).

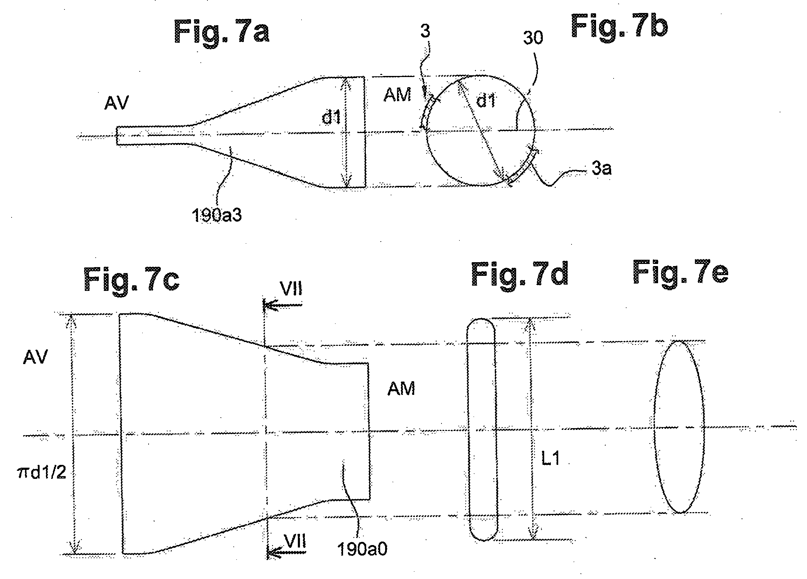

Le tuyau 3 présente un axe longitudinal 30. Ce tuyau est flexible, à section déformable entre une section interne circulaire (figure 7b, diamètre interne d1) et une section interne aplatie qui peut être nulle. Il est aussi pliable sur lui-même longitudinalement. On peut prévoir, à l'endroit des pliures, un rayon de courbure inférieur à 10% (et de préférence 5%) du diamètre de sa section interne circulaire.

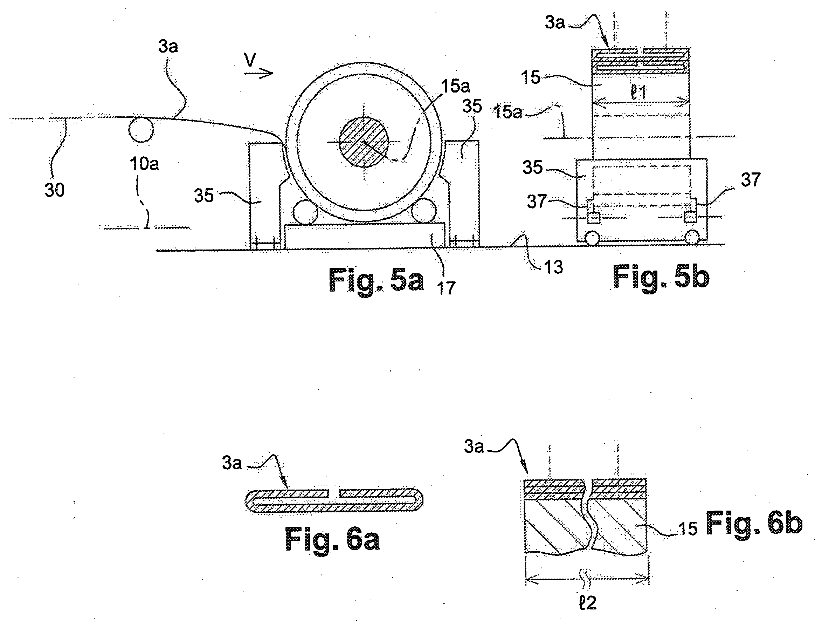

Dans l'exemple préféré illustré, le dispositif de pose 10 comprend :
- (au moins) un touret rotatif 15 autour duquel est enroulé un premier tronçon de tuyau 3a dans un état aplati de sa section (voir figures 5a,5b,6),
- un dévidoir 17 à rouleaux tels 17a,17b et pourvu d'un moteur 170 d'entrainement en rotation, pour dérouler le tuyau, ici le premier tronçon 3a,
- des moyens de présentation 19 pour présenter l'un en face de l'autre, dans un état communément conformé, plus ou moins arrondi ou aplati, de leur section, le premier tronçon de tuyau 3a issu du touret 15 et un second tronçon 3b du tuyau situé en aval du premier en référence au sens 30a de pose du tuyau,
- des moyens d'assemblage 21 pour une liaison étanche à l'eau entre les premier et second tronçons de tuyau 3a,3b dans l'état communément conformé, et obtenir (au fur et à mesure des assemblages de tronçons) le tuyau 3, et, dans ce cas,
- des moyens de tensionnement 23 pour transmettre au tuyau 3 une tension mécanique axiale d'avance f1 vers l'aval (AV) et/ou de recul f2 vers l'amont (AM),
- un treuil 25 pour amplifier ladite tension axiale (telle f3 figure 1), au moins pour l'avance du tuyau 3, en aval du treuil,
- et, de préférence, des moyens 27 d'attache d'un (ensemble de) lest 29 au tuyau 3.

Ainsi, la qualité de réalisation de ce tuyau va être favorisée et, pour la pose en mer du tuyau, on va pouvoir tendre vers une sécurité, ergonomie, et vitesse optimisées de pose.

Toujours dans cet exemple préféré, on conseille que la structure flottante 1, plutôt qu'une barge ou plateforme tractée ou plus généralement mue par un navire d'appoint, soit, comme illustré (voir notamment fig.1), un navire 1' à positionnement dynamique comprenant de la proue 1a vers la poupe 1b :
- le(s) touret(s) rotatif(s) 15,
- le(s) dévidoir(s) 17 motorisé(s) permettant donc de dérouler le tronçon de tuyau depuis le(s) touret(s) rotatif(s),
- les moyens 19 de présentation des premier et second tronçons de tuyau 3a,3b,
- les premiers moyens d'assemblage 21 entre ces premier et second tronçons de tuyau,
- les moyens de tensionnement 23,
- le treuil 25,
- puis les moyens 27 d'attache du lest 29. Les moyens 27 d'attache peuvent comprendre des noeuds d'accrochage de poids de lestage autour du tuyau et qui peuvent pendre sous lui, comme illustré.

On conseille un échelonnement de ces moyens les uns après les autres le long de l'axe longitudinal 10a du navire 1', de la proue 1a vers la poupe 1b, parallèlement donc à l'axe longitudinal 30 de déroulement du tuyau.

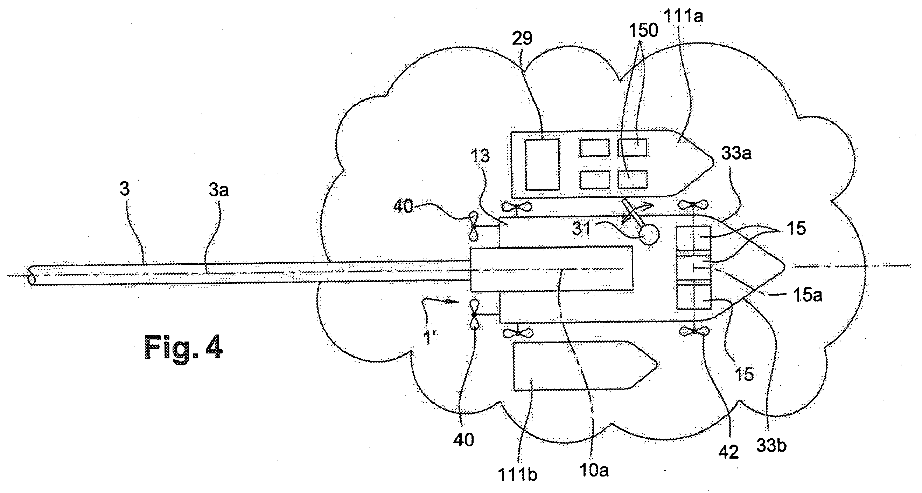

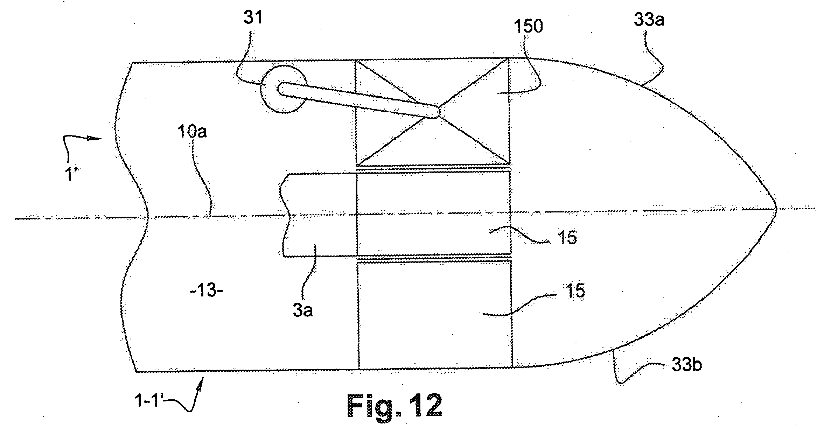

Pour faciliter et sécuriser les manoeuvres d'approvisionnement à bord des rallonges de tuyaux (sur tourets) et d'évacuation des tourets vides, on recommande ce qui suit, comme montré schématiquement figures 1,3,4,12 : Le touret 15, ou chaque touret une fois en état opérationnel sur le pont 13, tournera autour d'un axe horizontal, tel 15a. Ce touret, pour être remplacé ou amené, sera mobile sur le pont 13, transversalement à l'axe longitudinal du tuyau (ou à l'axe longitudinal 10a du navire) et sera monté de façon amovible sur ce pont. Une grue 31, pour le grutage de tourets, sera disposée sur le pont 13, plus près d'un premier bord 33a de la structure flottante que d'un second bord 33b opposé au premier (figures 4,12). Du côté de ce premier bord 33a, un deuxième touret rotatif 150, autour duquel sera donc enroulé un troisième tronçon de tuyau 3c, pourra être gruté sur le pont via la grue 31.

Ainsi, pour gérer l'approvisionnement en longueurs de tuyaux, on pourra, en plaçant un premier navire d'approvisionnement 111a (ou toute structure flottante équivalente) le long du premier bord 33a, hisser à bord sur le pont le troisième tronçon de tuyau 3c alors enroulé autour du touret supplémentaire 150 apporté par ce premier navire d'approvisionnement 111, tandis que sur le bord opposé 33b on pourra ensuite, ou préalablement, déborder (éventuellement à bord d'un second navire d'approvisionnement 111b), le touret vide 15 à évacuer, le tout via la grue 31 (voir figure 4).

Comme schématisé figures 5a,5b, le touret 15, comme les autres après lui, pourra, par exemple via des glissières, être monté sur des rails 35 orientés (ou orientables) de travers par rapport à l'axe 10a. En manoeuvre de remplacement comme ci-dessus, le touret 15 sera mobile sur les rails 35 et amovible vis-à-vis de celui-ci. En manoeuvre de déroulement du tronçon de tuyau enroulé autour de lui, il sera fixé de façon solide aux rails 35. Des moyens 37 libérables de fixation, par exemple à crochets libérables, peuvent permettre cela.

Pour limiter l'encombrement des tourets sans gêner la manoeuvre des tronçons de tuyau, deux possibilités sont proposées :
La première (voir figures 5b et 6a) est que le touret, tel 15, présente une largeur 11 orientée perpendiculairement à l'axe longitudinal 30 du tuyau, cette largeur étant supérieure au demi-périmètre extérieur π.d1/2 du tuyau dans un état circulaire de la section de ce tuyau (voir figure 7b). Le (tronçon concerné de) tuyau est alors enroulé autour du touret 15, à plat non replié sur lui-même.

On doit comprendre que le tuyau pourrait toutefois être alors plutôt dans un état immédiatement proche d'un tel état à plat, c'est-à-dire ovalisé. Par exemple, la structure du tuyau pourrait rendre difficile voire déconseillée, un tel écrasement complètement à plat du tuyau. A ce sujet, ce tuyau sera favorablement constitué d'un tube en matière tissée en continu de fils synthétiques.

La seconde possibilité (voir figure 6b) est que le touret présente une largeur 12, orientée comme ci-dessus, mais qui sera alors inférieure au demi-périmètre π.d1/2. Le (tronçon concerné de) tuyau sera dans ce cas enroulé à plat (ou dans ledit état immédiatement proche), replié sur lui-même, autour du touret.

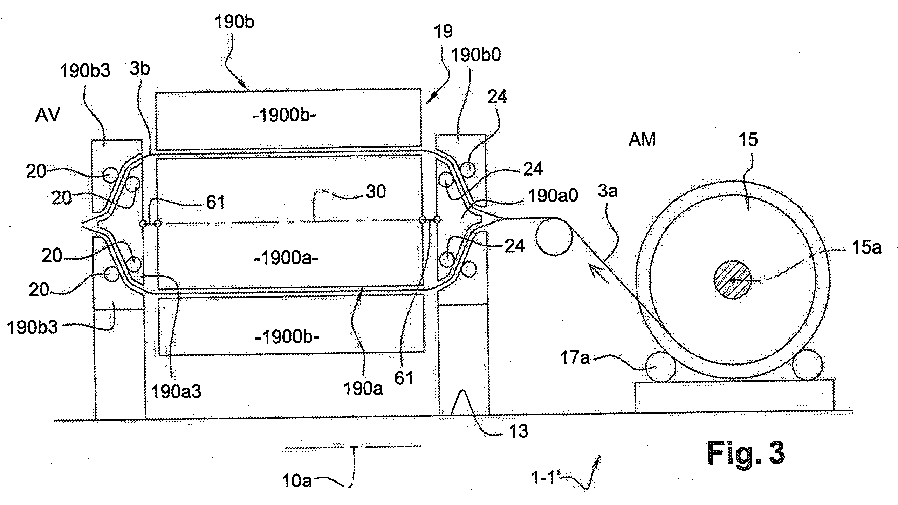

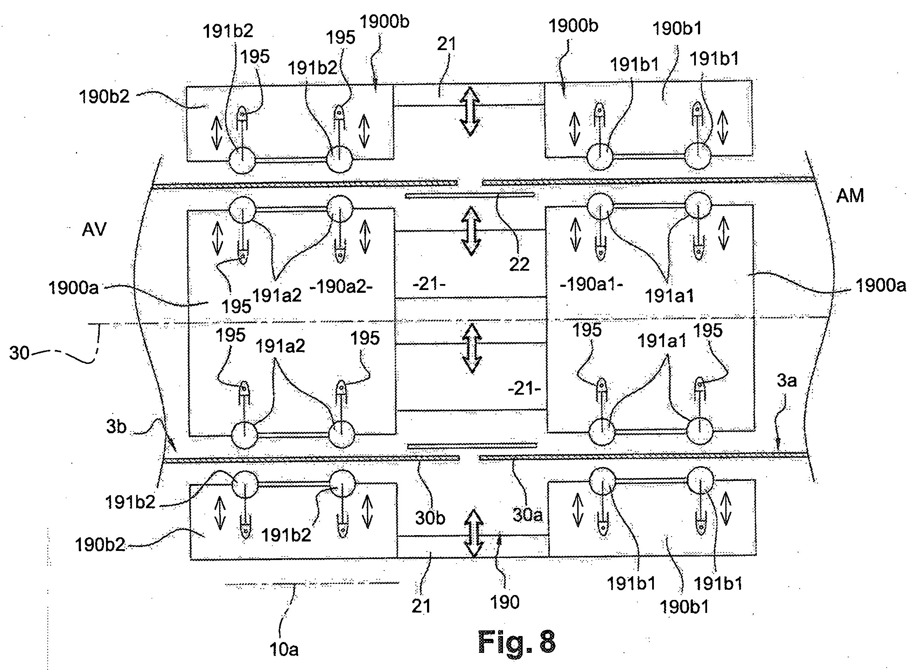

Si l'on s'intéresse maintenant aux moyens de présentation 19 - qui permettent donc de présenter et d'abouter les tronçons amont et aval à considérer, tels 3a,3b ci-avant - on prévoit favorablement ce qui suit, pour sécuriser cet assemblage et assurer un positionnement longitudinal des tronçons concernés du tuyau, et notamment une avance, suffisamment rapide dans de bonnes conditions de sécurité :
Comme schématisé figures 3,8 notamment, les moyens de présentation 19 comprennent :
   - un premier élément 190a destiné, tel un berceau cylindrique expansible radialement à l'axe 30, à être reçu à l'intérieur des premier et second tronçons de tuyau 3a,3b, via leurs extrémités libres respectives à abouter 30a,30b,
   - un second élément creux 190b disposé autour du premier élément 190a, de sorte que lesdits premier et second tronçons de tuyau puissent être interposés, suivant l'axe longitudinal 30 du tuyau, entre les premier et second éléments 190a,190b.

Au moins le premier élément 190a, ici également le second élément 190b extérieur creux, comprend longitudinalement, suivant l'axe 10a (ou 30), trois sections distinctes échelonnées d'amont en aval ; voir figures 3,7a,7b,7c,7d :
- une première section, amont, respectivement 190a0, 190b0 dont la section droite va en augmentant vers l'aval suivant l'axe 10a, en face du premier tronçon de tuyau 3a
- une seconde section intermédiaire, respectivement 1900a0, 1900b0 dont la section droite est (sensiblement) constante suivant l'axe 10a, juste avant et après la zone d'assemblage (moyens 21,22),
- une troisième section, aval, respectivement 190a3,190b3 dont la section droite va en diminuant vers l'aval suivant l'axe 10a, en face du second tronçon de tuyau 3b.

Ces sections vont jouer le rôle de conformateur (surtout les première et troisième sections) vis-à-vis du tuyau qui ainsi, depuis la section aplatie qu'il a en sortie du touret 15, va pouvoir être élastiquement déformé, de façon à être mis au rond ou suivant une section arrondie, telle qu'une section sensiblement elliptique, en particulier en face des moyens d'assemblage 22, avant de retrouver plus ou moins sa section aplatie en fin de section 190a3, 190b3.

Figure 7a, la troisième section 190a3 passe (en amont, AM) d'une section circulaire ou elliptique à faible excentricité, avec un périmètre extérieur légèrement inférieur au périmètre intérieur (π.d1) du tuyau (figure 7b), à, plus en aval (AV), une section en forme d'ovale très allongée horizontalement (figure 7d), avec une grande largeur L1 à nouveau légèrement inférieure au périmètre intérieur (π.d1) du tuyau qui, comme ci-dessus épouse sensiblement élastiquement cette forme qui lui est imposée,

Figure 7c, la première section 190a0 passe (en amont, AM) de la section en forme d'ovale très allongée horizontalement (figure 7d), avec une grande largeur L1 à, à son extrémité aval (AV), ladite section circulaire ou elliptique à faible excentricité, avec son périmètre extérieur légèrement inférieur au périmètre intérieur (π.d1) du tuyau (figure 7b).

La figure 7e montre un état intermédiaire de la section, donc du tuyau, l'évolution de section étant favorablement continue.

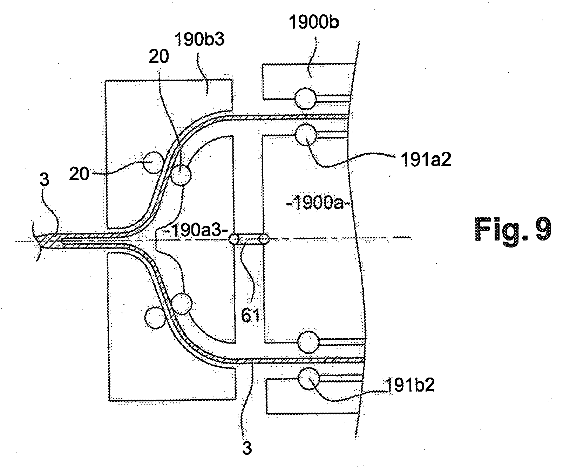

Figures 3,9 on voit plus exactement une conformation préférée des secondes sections intermédiaire, 1900a0, 1900b0 des éléments 190a,190b. Ces sections intermédiaires comprennent chacun une partie amont 190a1, 190b1 et une partie aval 190a2,190b2, respectivement positionnées, lors d'un aboutage, face aux premier et second tronçons de tuyau 3a,3b (voir figure 8).

L'un au moins de ces premier et second éléments, ici les deux, comportera de préférence des premiers et seconds moyens d'entraînement, pour entraîner le premier ou second tronçon de tuyau 3a,3b selon l'axe longitudinal 30. A nouveau, ces premier et second moyens d'entraînement comprennent chacun une partie amont 191a1, 191b1 et une partie aval 190a2,190b2, respectivement positionnées lors d'un aboutage face aux premier et second tronçons de tuyau 3a,3b (voir figure 8).

De préférence, chacune de ces parties amont 191a1, 191b1 et aval 190a2,190b2 seront pourvues de moyens d'appui et d'écartement réglables 195, tels que des vérins hydrauliques qui permettent de régler la position radiale des premiers et seconds moyens d'entraînement, de manière à serrer la paroi du tuyau 3 entre les patins, au rayon désiré ; cf. figure 8.

De préférence, la partie amont de ces premiers et/ou seconds moyens d'entraînement 191a1, 191b1 est adaptée à entraîner temporairement, vers l'aval (AV) le premier tronçon de tuyau 3a selon ledit axe longitudinal 30, sur une distance prédéterminée, vers le second tronçon de tuyau 3b en place entre la partie aval 190a2,190b2, et dont l'extrémité libre est positionnée en face des moyens d'aboutage 22. Très éventuellement, on pourrait prévoir l'inverse : via ladite partie aval (191a2, 191b2) des moyens précités, translater vers l'amont le second tronçon de tuyau 3b vers le premier. Ceci entraînerait une tension sur le tronçon de tuyau déjà posé qui pourrait être compensée par un recul de la structure de pose.

On conseille que lesdites partie amont et aval (191a1,191b1;191a2,191b2) des moyens précités soient disposés pour agir suivant l'axe 10a/30, avec a priori une capacité à se rapprocher et s'éloigner par paires (191a1 avec 191b1 et 191a2 avec 191b2), transversalement à l'axe précité, de façon à être actifs (avec si nécessaire une pression variable sur le tuyau) ou inactifs aux moments souhaités (voir ci-après) vis du/des tronçons de tuyau disposé(s) en regard.

Pour éviter une longueur de coulissement excessive suivant l'axe longitudinal 10a du navire des moyens 190a, non compatible avec l'encombrement maximum autorisé à bord, des butées axiales aval 20 et amont 24 (figures 3,9) sont prévues en amont et en aval, à l'endroit des sections internes et externes 190a0, 190b0 et 190a3,190b3.

De préférence, des attelages souples 61 relieront axialement les parties internes 190a0, 1900a, 190a3.

En liaison avec ce qui précède, on conseille encore, dans le même but que ci-dessus, que la partie aval 191a2,191b2 des premiers et/ou seconds moyens d'entraînement soit adaptée à entraîner ensemble vers l'aval les premier et second tronçons de tuyau (3a,3b) assemblés.

De fait, on recommande même que les seconds moyens d'entraînement soient reliés à des moyens de commande 63 (figure 8), pour :
- alors que les premier et second tronçons de tuyau (3a,3b) ne sont pas encore assemblés, inactiver la partie aval 191a2,191b2 des premiers et/ou seconds moyens d'entraînement vis-à-vis de l'entraînement dudit second tronçon de tuyau, et,
- lorsque les premier et second tronçons de tuyau sont aboutés par les moyens d'assemblage 22, activer la partie amont et/ou la partie aval 191a2,191b2 des premiers et/ou seconds moyens d'entraînement vis-à-vis de l'entraînement desdits tronçons de tuyau assemblés.

Des actions coordonnées des premiers et seconds moyens d'entraînement pour, en phase active, agir de part et d'autre de la paroi du tuyau, contre elle, sont conseillées, par exemple via des vérins contrôlés par les moyens de commande 63 (figure 8, on n'a pas illustré les liaisons avec la partie aval 191a2,191b2).

De la même manière, on recommande qu'une fois les premier et second tronçons de tuyau assemblés via les moyens 21, les parties tant amont qu'aval 191a2, 191b2 des premiers et seconds moyens d'entraînement soient activées par la commande 63, en coordination avec les manoeuvres du navire, et en particulier son avance suivant l'axe 10a.

L'assemblage entre les tronçons 3a,3b sera de préférence un aboutement avec recouvrement l'une par l'autre des extrémités des tronçons de tuyau, sur une distance variable suivant les cas de figures, typiquement 50cm à 2m (non représenté).

Typiquement, les moyens d'assemblage 21 seront mobiles transversalement à l'axe 30, entre une position écartée, radialement en retrait, des extrémités bord à bord des tronçons de tuyau et une position d'assemblage, radialement contre ou immédiatement proche de ces extrémités des tronçons 3a,3b de tuyau (voir doubles flèches figure 8).

Les moyens d'assemblage 21 pourront comprendre des moyens de soudage, tel un anneau de soudage 22 (figure 8) applicable contre les extrémités à souder des tronçons 3a,3b par les moyens expansibles (et ensuite rétractables) d'assemblage 21. Les tronçons de tuyau seront en matière plastique fusibles (a priori renforcée par des fibres, des fils, ou autres structures de renfort mécanique de tube souple), assemblables entre eux par thermo-soudage, de façon étanche au liquide concerné.

De préférence encore, les premiers moyens 191a d'entraînement temporaire seront inactifs vis-à-vis de l'entraînement du second tronçon de tuyau 3b jusqu'à ce que lesdites extrémités libres 30a,30b des premier et second tronçons de tuyau soient liées ensemble de façon étanche à l'eau par les moyens d'assemblage 21.

Ainsi, on alliera au mieux, sécurité, ergonomie et rapidité d'assemblage.

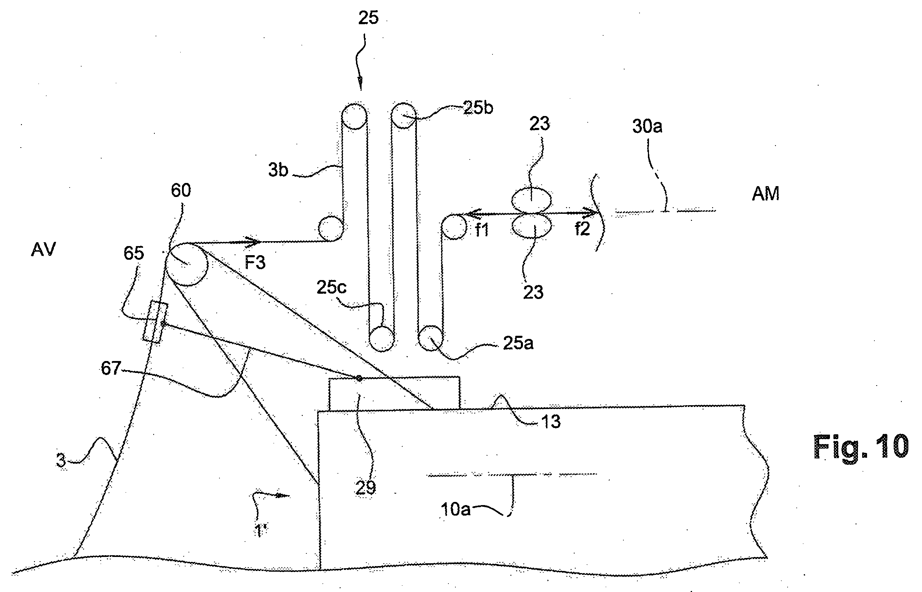

Encore plus en aval sur le pont 13, on recommande par ailleurs que le treuil 25 soit à effet de cabestan, avec plusieurs rouleaux rotatifs motorisés, tels 25a,25b,25c chacun à axe horizontal, ces axes étant décalés en hauteur, de préférence pour au moins deux d'entre eux par rapport au moins au troisième ; voir figure 10 notamment. En aval des moyens 19 de présentation et 21 d'assemblage (plus près donc de la poupe qu'eux), le tuyau allongé 3 passe autour successivement autour de ces rouleaux rotatifs. Chaque rouleau tourne (autour d'un axe perpendiculaire à l'axe 30a ou 10a) en sens inverse du suivant, les rouleaux s'échelonnant le long de l'axe longitudinal 10a et/ou 30a. Par leurs commandes individuelles, qui peuvent être différentes d'un moteur à l'autre, les moteurs des rouleaux rotatifs permettent de faire varier la tension sur le tuyau 3.

Concernant maintenant l'installation du tuyau, on peut noter ce qui suit :
L'installation est organisée en un chantier marin continu entre les atterrages amont et aval.

L'installation des atterrages est effectuée en fonction des caractéristiques particulières du site d'implantation de l'ouvrage.

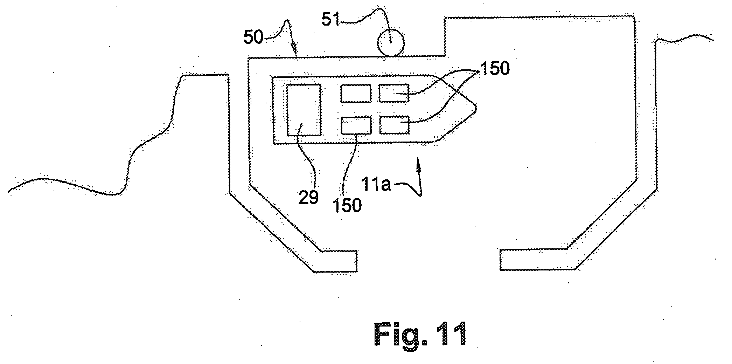

Les moyens mis en oeuvre comprennent essentiellement :
- une base 50 d'opérations marines qui est un port pouvant accueillir des bateaux de haute mer tels 111a, 111b, disposant d'un quai en eau profonde et de moyens 51 de manutention de charges lourdes, tels des grues (figure 11),
- le navire de pose 1' (ou la structure flottante évoquée), pourvu donc d'un système de positionnement dynamique 37 (à commande centralisée 38 et hélices axiales 40 et latérales 42 ; voir figures 1 et 4), d'une surface de pont 13 permettant d'installer les dispositifs précités (15-27) propres à la pose de l'ouvrage (le tuyau 3 avec ses lests 29). Pontée par exemple sur 800m² environ et ouvert sur son tableau arrière 112, il est pourvu d'une grue de bord 31 qui sera favorablement à compensation de pilonnement,
- les navires de transport, tels 111a, 111b, peuvent en continu approvisionner en tronçons de tuyau flexible et en lests le navire de pose 1' (figures 4,11). Ces charges sont donc transférées à bord du navire de pose à la l'aide de la grue de bord,
- des navires de reconnaissance des fonds sous-marins (en anglais « survey boats ») peuvent être utilisés pour vérifier en amont de la pose l'absence d'obstacle sur la route prédéfinie pour l'ouvrage, et en aval pour vérifier la bonne position de l'ouvrage, après pose sur le fond marin.

Une alternative au positionnement dynamique du support naval (navire) ou de la structure flottante concernée consisterait à utiliser un système d'ancrage statique comprenant plusieurs, par exemple six ou huit, lignes d'ancres à déplacer à intervalles réguliers. Les asservissements des treuils seraient alors de préférence pilotés par la position absolue du support naval. Ce n'est pas la solution préférée, eu égard à la pose souhaitée.

Le montage du touret 15 avec son tronçon de tuyau flexible sur le dévidoir motorisé 17 permet de dérouler le tuyau à la vitesse requise par la pose.

Ensuite, le déroulage et l'avancée de ce tronçon de tuyau (alors aplati) jusqu'à la station d'aboutage 190 permettent de remettre le tuyau vers une forme de cylindre à base circulaire, ou ovalisée, autorisant l'assemblage précité de leurs extrémités.

Pour cela, la station d'aboutage 190 est donc pourvue de ceux précités desdits moyens 19 présents à l'intérieur du tuyau et transitant dans les deux tronçons, tels 3a,3b, sur une distance axiale limitée par les butées aval 20 et amont 24 (figure 3), au cours de la pose.

A la station d'aboutage, l'extrémité 3b des tronçons de tuyau déjà aboutés l'un à la suite de l'autre et en cours de pose, est immobilisée à l'aide des moyens de présentation 19. L'extrémité du tronçon 3a de prolongation est alors amenée au niveau de la station d'aboutage et insérée dans les moyens de présentation 19, entre les structures 190a et 190b.

Les extrémités desdits tronçons amont et aval sont ensuite aboutées.

En aval de cette station d'aboutage, la partie aval 190a3 du dispositif conformateur 190a présent à l'intérieur du tuyau et transitant alors dans le tuyau permet de remettre le tuyau flexible 3 dans sa forme de ruban aplati (ou du moins plus plat).

Le tuyau 3 entre alors dans le dispositif de tensionnement 230 qui, via les moyens de tensionnement 23 qu'il comprend, et qui peuvent comporter des chenilles à vitesse de roulement et pression sur le tuyau pilotées de façon variable, va donc lui transmettre une tension axiale. Ceci peut donc être opéré par frottement, donc sous pression, entre les moyens de contact précités et ici les parois extérieure et intérieure du tuyau 3.

Les moyens de tensionnement 23,230 sont avantageusement pilotés par l'avancement du navire de pose de manière à faire avancer le tuyau flexible vers l'arrière 1b (aval) du navire de pose à la même vitesse que ce navire avance via son(ses) moteur(s) de déplacement.

Un pilotage motorisé, et qui peut si nécessaire être asservi, des moyens de tensionnement 23 permet de faire avancer ou reculer le tuyau flexible dans ces moyens de tensionnement.

Le tuyau passe ensuite, plus en aval, dans le treuil 25 où la tension présente dans le tuyau 3 est amplifiée par l'application d'un couple sur chacun des rouleaux, ou tambours, précités du treuil. Si, comme préféré, le treuil comporte plusieurs rouleaux successifs sur lesquels le tuyau 3, soumis à une tension axiale qui l'applique contre la paroi extérieure du rouleau, est également soumis à une tension croissante du fait du frottement existant entre le tuyau flexible et la surface du rouleau. Le treuil, ici les rouleaux 25a,25b,25c, est (sont) piloté(s) en fonction de l'avancement du tuyau 3 dans les moyens de tensionnement 23.

A la sortie du treuil, la tension présente dans le tuyau 3 est un multiple de la tension imprimée par les moyens de tensionnement 23. Ce multiple dépend des commandes en rotation des moteurs des rouleaux du treuil 25.

Par la tension qu'ils imposent au tuyau (pression exercée), les moyens de tensionnement 23 pilotent le treuil 25, en étant asservis à l'avance du navire 1'.

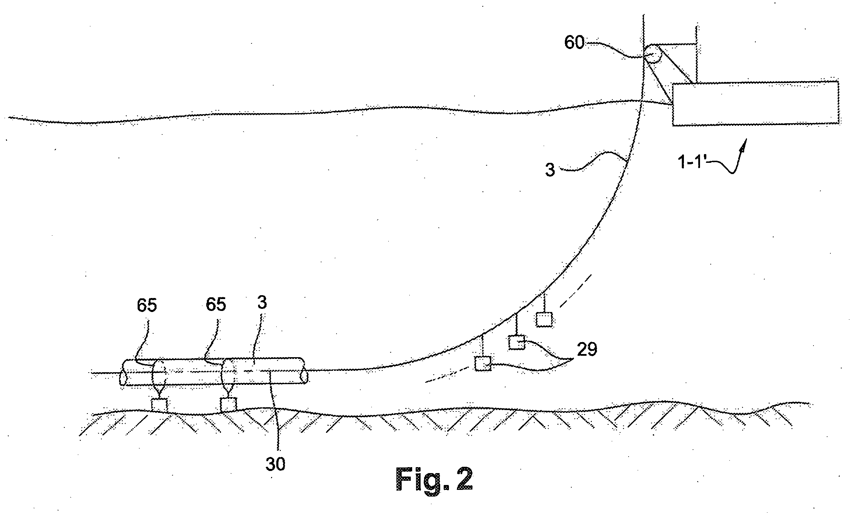

Le tuyau 3 arrive alors au rouleau arrière 60 du navire de pose où il s'appuie au départ de la portée libre entre le navire de pose et le fond marin 11 (voir figure 2 notamment).

En aval (arrière) de ce rouleau arrière, les lests 29 sont attachés au tuyau 3 de manière à finir la préparation de l'ouvrage 3,29 à immerger qui comprend donc le tuyau flexible 3 et ses lests.

On recommande a priori que les lests 29 soient attachés au tuyau flexible à intervalles réguliers.

Un dispositif de manutention des lests permet favorablement de les présenter à intervalles réguliers à la station d'attache. L'attache, pour chaque lest, peut être réalisée par un arceau 65 entourant le tuyau et auquel est suspendu, par un câble 67, un poids formant lest. Après avoir passé l'arceau autour du tuyau, on le serre pour le maintenir en place. FR-A-2859265 divulgue une solution de lestage.

Lorsque le système de lestage est attaché au tuyau flexible, l'ensemble est pesant et fondrier dans l'eau de mer. La portée libre entre le fond et la surface prend la forme d'une chainette dont les paramètres dépendent des caractéristiques du projet : poids fondrier de l'ensemble, profondeur d'eau et tension de pose.

Au fur et à mesure que le navire de pose l'avance après aboutage/assemblage des éléments de tuyau, tels 3a,3b, les moyens de tensionnement et le treuil font avancer le tuyau flexible 3 vers l'aval (arrière) du navire de pose et la portée libre se déplace en conservant sensiblement sa forme d'équilibre.

Une longueur de l'ouvrage 3,29 se dépose sur le fond, cette longueur correspond sensiblement à la longueur dont les moyens de tensionnement 23 ont fait avancer le tuyau, à tension relativement constante.

La portée libre a une longueur déterminée par la tension horizontale appliquée en tête à l'ouvrage 3,29.

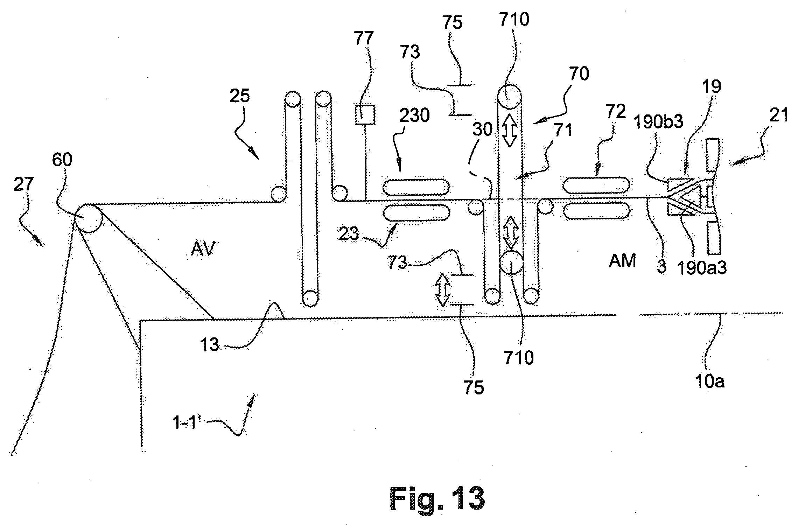

Figure 13, on voit un possible d'un dispositif 70 à rattrapage contrôlé de longueur de tuyau et libération de mou (de ce même tuyau 3) qui peut être prévu pour assurer une compensation au pilonnement en mer du navire 1', ou de la structure navale concernée si elle y est soumise, voire du cavalement. Il s'agit là de limiter l'effet sur le tuyau 3:
- de ce mouvement en translation du bateau qui correspond au mouvement de haut en bas de la coque,
- et/ou du mouvement d'un bateau d'avant en arrière, causé en général par la rencontre avec les vagues.

Pour cela, de seconds moyens de tensionnement 72 situés en amont (AM) des premiers moyens de tensionnement 23 permettent de retenir axialement ou de libérer la translation axiale du tuyau 3. Le tuyau est alors dans un état aplati, de préférence plat avec sa section interne nulle. Les seconds moyens 72 peuvent les mêmes que les premiers 23. A l'un et/ou l'autre de ces moyens de tensionnement 23,72 est liée fonctionnellement une réserve 71 de longueur de tuyau qui permet de laisser filer ou de rattraper une longueur de ce tuyau 3, en fonction du pilonnement et/ou du cavalement. Le rouleau arrière 60 peut être une référence de positionnement à cet égard. Et un asservissement 77 à ce(s) mouvement(s)du navire, ou de la structure, est de préférence prévu, qui tient compte des sur-tensions et des sous-tensions (mouts) mécaniques détectées par un capteur du système d'asservissement 77. La réserve 71 peut comprendre des rouleaux (ici deux) 710 à positions variables, autour desquels passe le tuyau entre les deux moyens de tensionnement 23,72 et qui allongent ou raccourcissent plus ou moins le chemin de circulation, en se déplaçant ici entre deux positions 73,75 respectivement plus proche et plus éloignée de l'axe de référence 30 du tuyau qui joint les deux moyens de tensionnement 23,72. Comme illustré, les seconds moyens de tensionnement 72 sont situés de préférence en aval (AV) du dispositif de présentation 19 et des moyens d'assemblage 21, ici en aval des moyens de conformation aval 190a/190b3. Précisément, placés entre la station d'aboutage et le tensionneur disposé à l'entrée du treuil à effet de cabestan ces moyens 72 vont permettre de faire avancer le tuyau à vitesse constante et donc au treuil et à son tensionneur de fonctionner à vitesse constante. On pourra maintenir constante la tension dans la portée libre, en rendant ou prenant de la longueur de tuyau, suivant l'état de la mer.

Ici, dans ces seconds moyens de tensionnement 72, et bien entendu également plus en aval, le tuyau 3 présentera une section aplatie, lors de sa pose.

Comme illustré, ces moyens 72 pourront être essentiellement constitués d'un cadre portant trois tambours ou rouleaux parallèles, dont deux fixes et un mobile, coulissant perpendiculairement à son axe le long du cadre. Le tuyau flexible 3 sous tension entre dans ce dispositif au niveau du tambour amont (AM) fixe, remonte sur le tambour mobile et redescend au niveau du tambour fixe aval. Le tambour mobile peut être maintenu en position par des vérins hydrauliques pouvant le faire monter ou descendre parallèlement à son axe. La longueur de flexible entre l'entrée et la sortie du dispositif est variable, déterminée par la position du tambour mobile. Les vérins hydrauliques peuvent être asservis au système de gestion de la position du support naval (positionnement dynamique).

On aura encore noté figure 13 la disposition sensiblement dans une même horizontale de la sortie des moyens de conformation aval 190a/190b3, des moyens 72,23 et de l'arrivée vers le rouleau arrière 60.

Dans ce qui précède, il doit être clair que le lestage du tuyau 3 pourrait être réalisé différemment, notamment par un lestage essentiellement continu. Par exemple, le tuyau (et ses tronçons de prolongement amont 3a) pourrai(en)t être pourvu(s) d'un bourrelet par exemple longitudinal, segmenté en compartiments, creux remplis ou à remplir d'un matériau pesant (de masse volumique supérieure à celle de l'eau douce transportée) et que l'on pourrait interrompre (de façon étanche) à proximité de chaque extrémité libre d'aboutage, là où doivent intervenir les moyens d'assemblage tels 21,22. Le bourrelet longitudinal, segmenté en compartiments, pourrait être monobloc avec le tuyau et dans un matériau souple, perméable, comparable à celui de ce tuyau pour être pliable et résistant comme lui. Par souci opérationnel et d'efficacité (notamment de rapidité) de pose, on recommande malgré tout l'utilisation d'un lestage, discret ou non, mais non monobloc avec le tuyau, avec une attache du lest au tuyau allongé en aval les moyens de tensionnement et du treuil.

On pourrait aussi prévoir que le lest soit posé partie avec le tuyau et partie après la pose du tuyau.

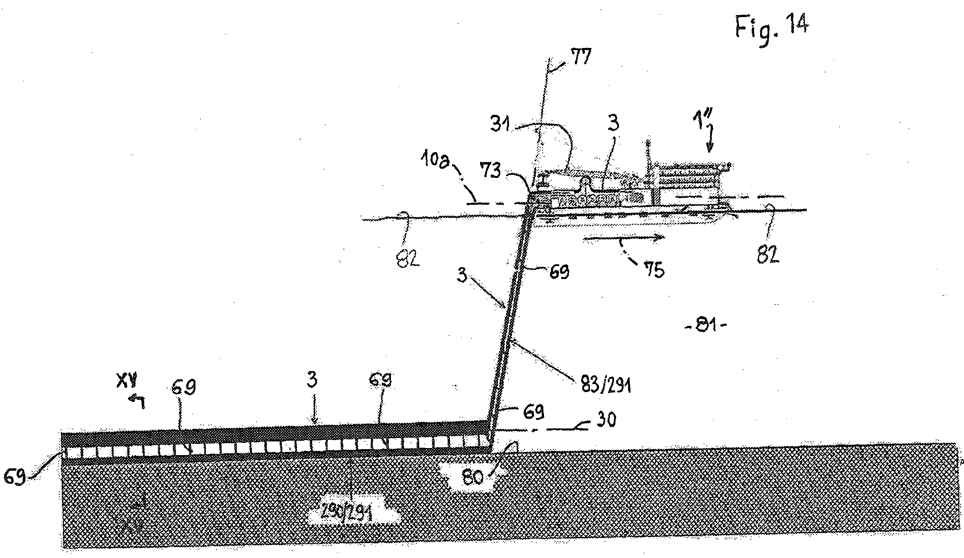

Figure 14 et suivantes, est illustrée une solution de pose différente, sans treuil, donc avec des efforts moindres exercés sur le tuyau 3 (tronçons aboutés).

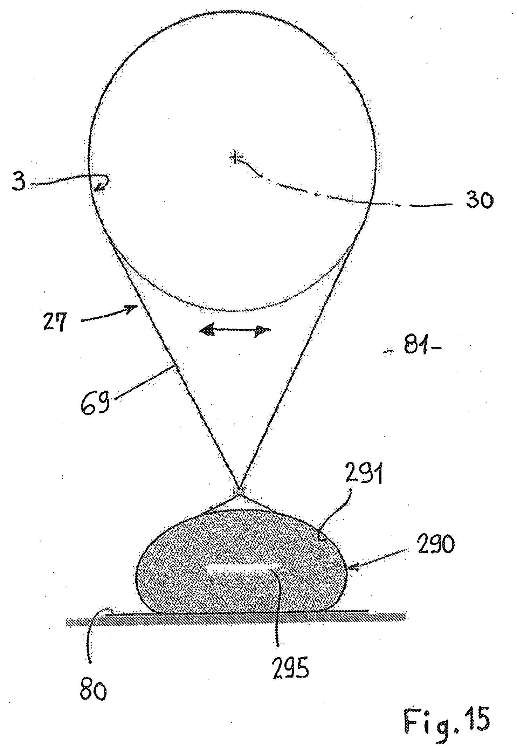

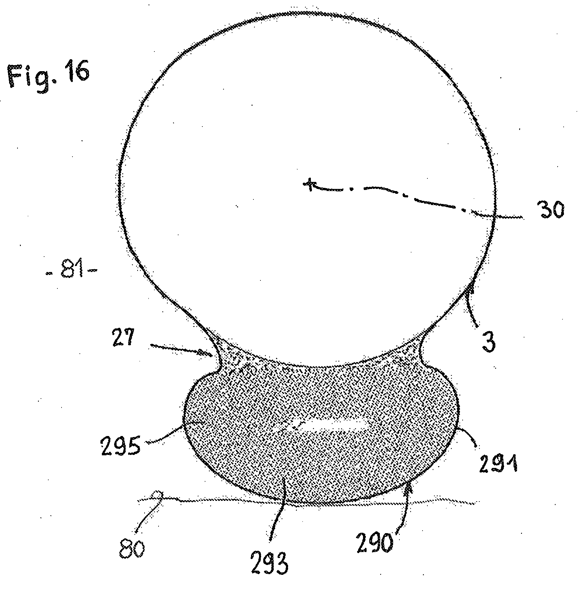

Deux possibilités sont toujours envisagées pour entraîner le tuyau 3 vers le bas, en direction du site 80 immergé de pose, alors que la structure flottante, ou le navire de pose, 1,1',1'' est situé à un niveau d'élévation 82 supérieur à celui du site :
- un système de lestage 290,291,295 qui est lié à des moyens 69 d'attache au tuyau dudit système de lestage (figure 15), ou
- un système de lestage qui est monobloc avec le tuyau (figure 16).

Dans les deux cas le système de lestage est fondrier dans l'eau.
Figures 15,16, le système de lestage comprend une enveloppe 291 de lestage, flexible, contenant, sans mélange avec le liquide à transporter, un lest 295 de masse volumique supérieure à celle de l'eau de mer, l'enveloppe, ainsi lestée et immergée dans un fluide (liquide 81 ici) ayant des mouvements non stationnaires, tendant à reposer sur le fond 80 du site d'immersion.
Figure 16, le tuyau 3 du type déjà présenté est pourvu d'un système de lestage 290 monobloc avec lui et qui comprend (au moins) un bourrelet tubulaire défini par la membrane 291 qui se raccorde à celle du tuyau pour former une poche 293 où disposer le matériau pesant 295 de lestage. Favorablement, le bourrelet, creux et flexible, s'étendra longitudinalement, parallèlement à l'axe 30 ; Il pourra être segmenté en compartiments.

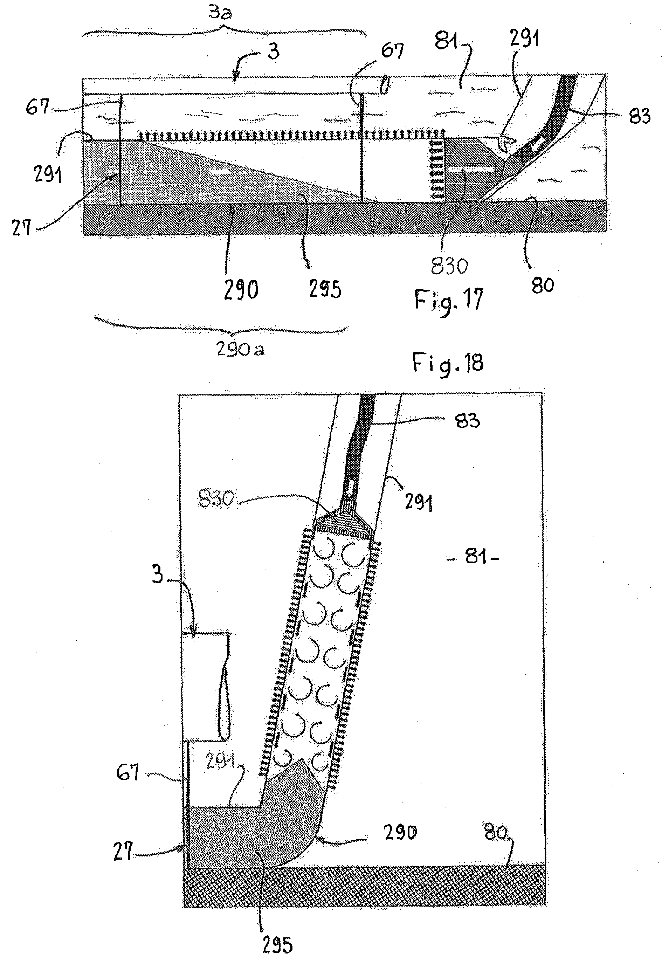

Avec les figures 17,18, on peut voir que, si un matériau granulaire sert pour le lestage du tuyau 3, les moyens 83 d'apport de ce matériau, tel une conduite souple, présenteront favorablement une ouverture 83 terminale de déversement du matériau, vers le fond (figure 18), ou au fond (figure 17) du fluide 81 où le tuyau est immergé, dans et au contact de l'enveloppe 291 de lestage.

On doit à ce sujet comprendre qu'autant on peut lester le tuyau 3 avant de l'immerger (comme figures 1,10) en confondant système de lestage et lest(s), autant on pourra préférer disposer le lest plus tard, en particulier :
- une fois le tuyau 3 et le (tronçon situé en face de lui du) système de lestage (jusqu'alors vides ou essentiellement vides) 290 parvenus à proximité immédiate du fond 80 au-dessus duquel s'étend le fluide 81 de pose (quelques mètres à dizaines de mètres du fond), comme figure 18), ou,
- une fois que le tronçon (tel 291a) du bourrelet faisant face au tronçon correspondant (tel 3a) de tuyau est déjà sensiblement étendu le long du fond 80, comme figure 17.

Il est entendu que, dans les deux cas, on choisira une enveloppe 291 tubulaire formant un bourrelet longitudinal unique ou un nombre limité de bourrelets très allongés (chacun de plusieurs centaines à plusieurs milliers de mètres).

Et alors, de préférence:
- avec les tronçons du tuyau 3 précédemment aboutés et pourvus du système de lestage (monobloc ou non), on immergera vide ou essentiellement vide le bourrelet, et,
- tuyau 3 et bourrelet 291 immergés, on apportera dans le bourrelet un matériau de masse volumique supérieure à celle du fluide 81.

Pour lester le tuyau 3 avec un matériau granulaire (tel du sable), on recommande d'ailleurs, en référence à la figure 14, que la conduite 83 d'apport du matériau granulaire de lestage 295 soit alimentée depuis la surface 82. On peut prévoir que, juste au-delà de la structure ou navire de pose 1'' (typiquement derrière), la conduite 83 soit immergée, dans le bourrelet tubulaire 291 (voir figures 17,18), en parallèle du tuyau, après qu'(a priori sur la structure flottante 1'') on ait pourvu ce tuyau de son système de lestage 290. On rappelle qu'à ce moment, ce dernier rend, ou non, alors fondrier l'ensemble tuyau/système de lestage, puisque le lest en lui-même n'est pas nécessairement encore présent. Par contre, l'attache 27 du système de lestage au tuyau a été déjà réalisée, de préférence en aval de l'assemblage des tronçons de tuyau entre eux.

Par ailleurs, dans un liquide d'immersion, tel 81 (eau de mer en l'espèce), animé de mouvements non stationnaires, on préfèrera a priori à la solution de la figure 16 celle de la figure 15 où le système de lestage, pourvu du lest 295 dans l'enveloppe 291, est attaché au tuyau par la liaison souple 69 (qui appartient aux moyens d'attache 27).

Ainsi, et comme cela est aussi possible figure 2, on permettra au tuyau 3 immergé (et rempli d'eau douce) d'osciller (dans l'eau de mer) par rapport au système de lestage, en fonction de mouvements non stationnaires du liquide d'immersion, alors que la masse (29,295) du système de lestage pourvu de son lest maintient celui-ci essentiellement fixe (voir double flèche figure 15).

On notera d'ailleurs que figures 2,14-15,17-18 on a cherché à illustrer l'avantage qu'il peut donc y avoir à ce que le tuyau 3 soit attaché avec une capacité de mouvement par rapport au lest, via le passage d'un arceau 65 autour du tuyau et/ou d'un câble, tel 67, de préférence flexible, ou encore d'une solution de sanglage souple 69.

Par rapport à celle des figures 1-2, la solution des figures 14-15,17-18 a en outre pour avantage d'éviter d'appliquer au tuyau, au moment de l'immerger, les tensions axiales imposée par la solution de la figure 1 et appliquées en particulier par le treuil 25. Certes, il est préférable que le tuyau 3, à immerger via le rouleau de poupe 73 du navire 1'', soit axialement sensiblement tendu, mais c'est surtout la masse déjà immergée du ruban allongé que forme la partie de tuyau 3 déjà au fond et soumise au(x) lest(s) qui assure la descente vers le fond 80 de la suite de l'ensemble 3/290 (ici non lesté pendant la descente), suivant une pente inclinée 77 (voir donc figure 14), ceci en conjugaison avec l'avance du navire 1" telle que son axe longitudinal 10a, celui 30 du tuyau lesté au fond et la direction d'avance 75 soient sensiblement parallèles, le tuyau lesté se déroulant et se posant au fond, derrière le navire 1''.

A noter encore (en comparaison avec celle à treuil des figures 1-13) la limitation de tension mécanique sur le tuyau 3 assurée par la solution des figures 14 et suivantes qui permet d'immerger le tuyau dans l'eau 81, et le maintenir sur ou vers le fond 80 du site d'immersion, au fur et à mesure que ce tuyau est immergé sous tension derrière la structure flottante 1" qui se déplace en surface (82) et à laquelle il est relié par le dispositif de pose (touret 15, dévidoir motorisé 17, moyens de présentation 19, moyens d'assemblage 21, 22...).

A cette fin, la structure flottante 1" comprend donc (comme celle 1,1'):
- des moyens (tels 38,40 et/ou 42) lui assurant un déplacement motorisé, pour naviguer, et
- des moyens (tels 83) d'apport de lest (tel 295) permettant d'apporter un tel lest au système de lestage 290, sur ou vers ledit fond d'immersion 80 (cf. figure 17 ou 18), où (comme par exemple montré figure 17) une première partie du tuyau (3a) et du système de lestage (290a) dont il est pourvu est déjà maintenue, par du lest déjà présent dans cette première partie du système de lestage.

On doit comprendre qu'autant on peut lester le tuyau 3 avant de l'immerger (comme figures 1,10) en confondant système de lestage et lest(s) (également appelé(s) masse(s) pesante(s)), autant on pourra donc préférer disposer le lest plus tard, en particulier :
- une fois le tuyau 3 et le (tronçon situé en face de lui du) système de lestage (jusqu'alors vides ou essentiellement vides) 290 parvenus à proximité immédiate du fond 80 au-dessus duquel s'étend le fluide 81 de pose (quelques mètres à dizaines de mètres du fond), comme figure 18, ou,
- une fois que le tronçon (tel 291a) du bourrelet faisant face au tronçon correspondant (tel 3a) de tuyau est déjà sensiblement étendu le long du fond 80, comme figure 17.

Il est entendu que, dans ces deux derniers cas, on choisira un bourrelet longitudinal 291 unique ou un nombre limité de bourrelets très allongés (chacun de plusieurs centaines à plusieurs milliers de mètres).

Toujours notamment pour contrôler les efforts de pose, on pourra alors, de préférence:
- avec les tronçons du tuyau 3 précédemment aboutés et pourvus du système de lestage (monobloc ou non), on immergera vide ou essentiellement vide le bourrelet 291, et,
- tuyau et bourrelet immergés, on apportera dans le bourrelet un matériau de masse volumique supérieure à celle du fluide 81.

## Revendications

1. Ensemble comprenant :
- un tuyau (3) de transport de liquide, ce tuyau présentant un axe longitudinal et étant :
* flexible,
* déformable entre une section interne circulaire et une section interne aplatie qui peut être nulle,
* pliable sur lui-même longitudinalement et,
- un dispositif de pose, sur un site, dudit tuyau; le dispositif de pose présentant un axe longitudinal et comprenant un touret (15) rotatif autour duquel est enroulé un premier tronçon de tuyau,
**caractérisé en ce que** :
- ledit premier tronçon de tuyau est enroulé autour du touret (15) dans un état aplati de sa section, suivant un ruban aplati,
- et le dispositif de pose comprend en outre :
* un dévidoir motorisé (17) pour dérouler le tuyau,
* des moyens de présentation (19) pour présenter l'un en face de l'autre, dans un état communément conformé, moins aplati de leur section que sur le touret, le premier tronçon de tuyau issu du touret et un second tronçon situé en aval du premier en référence au sens de pose du tuyau,
* des moyens d'assemblage (21,22) pour une liaison étanche à l'eau entre les premier et second tronçons de tuyau dans l'état communément conformé, et obtenir ledit tuyau allongé,
* et, optionnellement, des moyens de tensionnement (23) pour transmettre au tuyau allongé une tension axiale d'avance vers l'aval et/ou de recul vers l'amont.

2. Ensemble selon la revendication 1, **caractérisé en ce que** les moyens (19) de présentation comprennent des moyens de conformation des premier et second tronçons de tuyau, ces moyens de conformation présentant, en amont et en aval des moyens d'assemblage, des sections qui respectivement augmentent et diminuent de l'amont vers l'aval le long de l'axe longitudinal du dispositif de pose, et que lesdits premier et second tronçons de tuyau suivent, en passant autour et le long de ces sections.

3. Ensemble selon la revendication 1 ou 2, **caractérisé en ce que** :
- le touret (15) présente une largeur orientée perpendiculairement à l'axe longitudinal du tuyau, cette largeur étant supérieure au demi-périmètre du tuyau dans un état circulaire de la section de ce tuyau,
et le tuyau est enroulé autour du touret, à plat ou dans un état immédiatement proche d'un tel état à plat, non replié sur lui-même perpendiculairement à son axe longitudinal, ou,
- le touret présente une largeur orientée perpendiculairement à l'axe longitudinal du tuyau, cette largeur étant inférieure au demi-périmètre du tuyau dans un état circulaire de la section de ce tuyau, et le tuyau est enroulé à plat, replié sur lui-même perpendiculairement à son axe longitudinal, autour du touret.

4. Ensemble selon l'une des revendications précédentes, **caractérisé en ce que** les moyens de présentation comprennent :
- un premier élément (190a, 190a1, 191a2) destiné à être reçu à l'intérieur des premier et second tronçons de tuyau, via leurs extrémités libres respectives,
- un second élément creux (190b, 190b1, 191b2) disposé autour du premier élément, de sorte que lesdits premier et second tronçons de tuyau puissent être interposés, suivant l'axe longitudinal du tuyau, entre les premier et second éléments.

5. Ensemble selon la revendication 4, **caractérisé en ce que** l'un au moins des premier et second éléments comporte des premiers et seconds moyens d'entraînement (191a1, 191b1, 191a2, 191b2) situés pour partie en amont et pour partie en aval des extrémités libres (30a,30b) à assembler desdits premier et second tronçons (3a,3b) de tuyau, pour entraîner le premier ou second tronçon de tuyau selon l'axe longitudinal du tuyau, la partie amont (191a1, 191b1) des premiers et/ou seconds moyens d'entraînement étant adaptée à entraîner temporairement le premier tronçon de tuyau (3a), selon ledit axe longitudinal, sur une distance prédéterminée, vers le second tronçon (3b) de tuyau, ou inversement, via ladite partie aval (191a2, 191b2) vers le premier tronçon (3a) de tuyau.

6. Ensemble selon la revendication 5, **caractérisé en ce que** les seconds moyens d'entraînement sont reliés à des moyens de commande (63) pour :
- alors que les premier et second tronçons de tuyau (3a,3b) ne sont pas encore assemblés, inactiver la partie aval (191a2,191b2) des premiers et/ou seconds moyens d'entraînement vis-à-vis de l'entraînement dudit second tronçon de tuyau, et,
- lorsque les premier et second tronçons de tuyau (3a,3b) sont aboutés par les moyens d'assemblage (22), activer la partie amont et/ou la partie aval (191a2,191b2) des premiers et/ou seconds moyens d'entraînement vis-à-vis de l'entraînement desdits tronçons de tuyau assemblés.

7. Ensemble selon l'une des revendication 1 à 6, comprenant un système de lestage (29,290,295) qui est fondrier dans l'eau et qui est lié à des moyens (27,65,67,69) d'attache au tuyau (3) dudit système de lestage de sorte que le tuyau et le système de lestage ne sont pasmonoblocs .

8. Ensemble selon la revendication 7, où :
- le système de lestage comprend une enveloppe (291) de lestage flexible, formant au moins un bourrelet tubulaire et propre à contenir, sans mélange avec le liquide à transporter, un lest (295) de masse volumique supérieure à celle de l'eau de mer,
- et l'enveloppe (291) qui, avec le tuyau (3), est immergée vide ou essentiellement vide, sur une partie au moins de la profondeur d'immersion, puis ainsi lestée par l'intermédiaire d'une conduite (83) d'apport dudit matériau granulaire alimentée depuis la surface (82) du liquide d'immersion et immergée, dans le bourrelet tubulaire , tend, dans un fluide ayant des mouvements non stationnaires, à reposer sur le fond (80) du site d'immersion.

9. Ensemble selon l'une des revendications 7 ou 8, où les moyens (27) d'attache comprennent une liaison souple (67,69,69b)
permettant une distance entre le tuyau et le système de lestage avec, en fonction de mouvements non stationnaires du liquide d'immersion et alors que la masse (29,295) du système de lestage pourvu de son lest maintient celui-ci essentiellement fixe, une possibilité d'oscillation du tuyau immergé par rapport audit système de lestage (29,290,295).

10. Ensemble selon la revendication 7 ou les revendications 7 et 9,
- où le système de lestage comprend une enveloppe (291) de lestage flexible, propre à contenir, sans mélange avec le liquide à transporter, un lest (295) de masse volumique supérieure à celle de l'eau de mer, l'enveloppe, (291) ainsi lestée et immergée dans un fluide ayant des mouvements non stationnaires, tendant à reposer sur le fond (80) du site d'immersion,
- et qui comprend des moyens (83) d'apport d'un matériau granulaire, en tant que lest, lesdits moyens (83) d'apport présentant une ouverture (830) de déversement du matériau granulaire, vers le fond, ou au fond, du fluide (81) où le tuyau est immergé, dans et au contact de l'enveloppe de lestage (291), par l'intermédiaire d'une conduite (83) d'apport dudit matériau granulaire alimentée depuis la surface (82) du liquide d'immersion.

11. Ensemble selon l'une des revendications 1 à 6, **caractérisé en ce qu'**il comprend un treuil (25) pour amplifier ladite tension axiale, au moins pour l'avance du tuyau allongé, en aval du treuil, et où passe ce tuyau avec sa section interne aplatie ou immédiatement proche.

12. Ensemble selon la revendication 11, **caractérisé en ce que** le treuil est à effet de cabestan et comprend ainsi plusieurs rouleaux motorisés, chacun pour la transmission d'une partie de la tension axiale, et autour desquels passe, sans tour complet, le tuyau allongé avec sa section aplatie ou immédiatement proche.

13. Structure flottante comprenant l'ensemble selon l'une des revendications précédentes disposé sur un pont (13) de la structure flottante.

14. Structure flottante selon la revendication 13, **caractérisée en ce que** :
- le touret (15) tourne autour d'un axe horizontal (15a),
- le touret est mobile sur le pont (13), transversalement à l'axe longitudinal (30) du tuyau, et est monté de façon amovible sur ce pont,
- et une grue (31), pour le grutage de tourets, est disposée sur le pont, plus près d'un premier bord de la structure flottante que d'un second bord opposé au premier du côté duquel un deuxième touret rotatif autour duquel est enroulé un troisième tronçon de tuyau peut être gruté sur le pont via ladite grue.

15. Structure flottante selon la revendication 13 qui comprend, pour immerger ledit tuyau dans l'eau, et le maintenir sur ou vers un fond (80) du site d'immersion, au fur et à mesure que ce tuyau est immergé vide, sous tension, derrière ladite structure flottante qui se déplace en surface et à laquelle il est relié par ledit ensemble:
- des moyens de déplacement pour naviguer, et
- des moyens (83) d'apport de lest (295) permettant d'apporter un tel lest au système de lestage, sur ou vers ledit fond d'immersion (80), où une première partie du tuyau et du système de lestage dont il est pourvu est déjà maintenue, par du lest déjà présent dans cette première partie du système de lestage.

## Patentansprüche

1. Gruppe, welche umfasst:
- eine Transportleitung (3) für Flüssigkeit, wobei diese Leitung eine Längsachse aufweist und ist:
-- flexibel,
-- verformbar zwischen einem kreisförmigen Innenquerschnitt und einem abgeflachten Innenquerschnitt, der Null betragen kann,
-- in Längsrichtung um sich selbst biegsam, und
- eine Vorrichtung zum Verlegen der besagten Leitung an einem Ort, wobei die Verlegevorrichtung eine Längsachse aufweist und eine drehbare Trommel (15) umfasst, um welche herum ein erster Leitungsabschnitt gewickelt ist,
**dadurch gekennzeichnet, dass**:
- der besagte erste Leitungsabschnitt um die Trommel (15) herum in einem abgeflachten Zustand seines Querschnitts entsprechend einem abgeflachten Band gewickelt ist,
- und die Verlegevorrichtung des Weiteren umfasst:
-- eine motorisierte Haspel (17), um die Leitung abzuwickeln,
-- Darbietungsmittel (19), um einander gegenüber, in einem gemeinhin formgegebenen, weniger abgeflachten Zustand ihres Querschnitts als auf der Trommel, den von der Trommel kommenden ersten Leitungsabschnitt und einen zweiten Abschnitt, welcher in Bezug auf die Verlegerichtung der Leitung stromabwärts des ersten gelegen ist, darzubieten,
-- Verbindungsmittel (21, 22) für eine wasserdichte Verbindung zwischen dem ersten und zweiten Leitungsabschnitt in dem gemeinhin formgegebenen Zustand und das Erhalten der besagten verlängerten Leitung,
-- und gegebenenfalls Spannmittel (23), um auf die verlängerte Leitung eine axiale Vorwärtsspannung stromabwärts und/oder Rückwärtsspannung stromaufwärts hin zu übertragen.

2. Gruppe nach Anspruch 1, **dadurch gekennzeichnet, dass** die Darbietungsmittel (19) Formgebungsmittel des ersten und zweiten Leitungsabschnitts umfasst, wobei diese Formgebungsmittel stromaufwärts und stromabwärts der Verbindungsmittel Querschnitte aufweisen, welche jeweils entlang der Längsachse der Verlegevorrichtung von stromaufwärts nach stromabwärts hin zunehmen und abnehmen, und denen der besagte erste und zweite Leitungsabschnitt folgen, indem sie um und entlang dieser Querschnitte verlaufen.

3. Gruppe nach Anspruch 1 oder 2, **dadurch gekennzeichnet, dass**:
- die Trommel (15) eine Breite aufweist, welche senkrecht zur Längsachse der Leitung ausgerichtet ist, wobei diese Breite größer dem Halbumfang der Leitung in einem kreisförmigen Zustand des Querschnitts dieser Leitung ist,
und die Leitung flach oder in einem Zustand, welcher einem solchen flachen Zustand unmittelbar nahe ist, senkrecht zu seiner Längsachse nicht um sich selbst gefaltet um die Trommel herumgewickelt ist, oder,
- die Trommel eine Breite aufweist, welche senkrecht zur Längsachse der Leitung ausgerichtet ist, wobei diese Breite kleiner dem Halbumfang der Leitung in einem kreisförmigen Zustand des Querschnitts dieser Leitung ist, und die Leitung flach, senkrecht zu ihrer Längsachse um sich selbst gefaltet, um die Trommel gewickelt ist.

4. Gruppe nach einem der vorstehenden Ansprüche, **dadurch gekennzeichnet, dass** die Darbietungsmittel umfassen:
- ein erstes Element (190a, 190a1, 191a2), welches dazu bestimmt ist, über deren jeweils freie Enden im Inneren des ersten und zweiten Leitungsabschnitts aufgenommen zu werden,
- ein zweites hohles Element (190b, 190b1, 191b2), welches so um das erste Element herum angeordnet ist, dass besagter erster und zweiter Leitungsabschnitt der Längsachse der Leitung entsprechend zwischen dem ersten und zweiten Element eingefügt werden können.

5. Gruppe nach Anspruch 4, **dadurch gekennzeichnet, dass** mindestens eines von dem ersten und zweiten Element erste und zweite Antriebsmittel (191a1, 191b1, 191a2, 191b2) umfasst, welche zum Teil stromaufwärts und zum Teil stromabwärts der zu verbindenden freien Enden (30a, 30b) des besagten ersten und zweiten Leitungsabschnitts (3a, 3b) gelegen sind, um den ersten oder zweiten Leitungsabschnitt der Längsachse der Leitung nach anzutreiben, wobei der stromaufwärtige Teil (191a1, 191b1) der ersten und/oder zweiten Antriebsmittel dazu eingerichtet ist, vorübergehend den ersten Leitungsabschnitt (3a) der besagten Längsachse nach über eine vorbestimmte Distanz zu dem zweiten Leitungsabschnitt (3b) hin, oder umgekehrt, über den besagten stromabwärtigen Teil (191a2, 191b2), zu dem ersten Leitungsabschnitt (3a) hin anzutreiben.

6. Gruppe nach Anspruch 5, **dadurch gekennzeichnet, dass** die zweiten Antriebsmittel mit Steuermitteln (63) verbunden sind, um:
- wenn der erste und zweite Leitungsabschnitt (3a, 3b) noch nicht verbunden sind, den stromabwärtigen Teil (191a2, 191b2) der ersten und/oder zweiten Antriebsmittel im Hinblick auf den Antrieb des besagten zweiten Leitungsabschnitts zu deaktivieren, und,
- wenn der erste und zweite Leitungsabschnitt (3a, 3b) durch die Verbindungsmittel (22) aneinandergefügt sind, den stromaufwärtigen Teil und/oder den stromabwärtigen Teil (191a2, 191b2) der ersten und/oder zweiten Antriebsmittel im Hinblick auf den Antrieb der besagten verbundenen Leitungsabschnitte zu aktivieren.

7. Gruppe nach einem der Ansprüche 1 bis 6, welche ein Ballastsystem (29, 290, 295) umfasst, das im Wasser sinkt und das mit Befestigungsmitteln (27, 65, 67, 69) am besagten Ballastsystem an der Leitung (3) so verbunden ist, dass die Leitung und das Ballastsystem nicht einstückig sind.

8. Gruppe nach Anspruch 7, wobei:
- das Ballastsystem eine flexible Ballasthülle (291) umfasst, welche mindestens eine schlauchförmige Wulst formt und geeignet ist, ohne Vermischung mit der zu transportierenden Flüssigkeit einen Ballast (295) mit einer Dichte größer als der des Meerwassers zu enthalten,
- und die Hülle (291), die mit der Leitung (3) leer oder im Wesentlichen leer auf mindestens einen Teil der Eintauchtiefe eingetaucht, anschließend so ballastbeschwert wird mittels einer Zuführleitung (83) des besagten granularen Materials, die von der Oberfläche (82) der Eintauchflüssigkeit her bespeist und in die schlauchförmige Wulst eingetaucht ist, danach strebt, in einer Flüssigkeit mit nicht stationären Bewegungen am Boden (80) der Eintauchstelle zu liegen.

9. Gruppe nach einem der Ansprüche 7 oder 8, wobei die Befestigungsmittel (27) eine nachgiebige Verbindung (67, 69, 69b) umfassen, welche einen Abstand zwischen der Leitung und dem Ballastsystem gestatten, mit, in Abhängigkeit von nicht stationären Bewegungen der Eintauchflüssigkeit und während die Masse (29, 295) des mit seinem Ballast versehenen Ballastsystems dieses im Wesentlichen feststehend hält, einer Möglichkeit der Schwingung der eingetauchten Leitung in Bezug auf das besagte Ballastsystem (29, 290, 295).

10. Gruppe nach Anspruch 7 oder den Ansprüchen 7 und 9,
- wobei das Ballastsystem eine flexible Ballasthülle (291) umfasst, welche geeignet ist, ohne Vermischung mit der zu transportierenden Flüssigkeit einen Ballast (295) mit einer Dichte größer als der des Meerwassers zu enthalten, wobei die so ballastbeschwerte und in eine Flüssigkeit mit nicht stationären Bewegungen eingetauchte Hülle (291) danach strebt, am Boden (80) der Eintauchstelle zu liegen,
- und welche Zuführmittel (83) für ein granulares Material als Ballast umfasst, wobei die besagten Zuführmittel (83) eine Öffnung (830) für die Einleitung des granularen Materials zum Boden hin oder am Boden der Flüssigkeit (81), in der die Leitung eingetaucht ist, in und in Berührung der Ballasthülle (291) mittels einer Zuführleitung (83) des besagten granularen Materials, welche von der Oberfläche (82) der Eintauchflüssigkeit her bespeist wird, aufweisen.

11. Gruppe nach einem der Ansprüche 1 bis 6, **dadurch gekennzeichnet, dass** sie eine Winde (25) umfasst, um die besagte axiale Spannung mindestens für die Vorwärtsbewegung der verlängerten Leitung stromabwärts der Winde und wo diese Leitung mit ihrem abgeflachten oder unmittelbar nahen Innendurchmesser durchläuft, zu verstärken.

12. Gruppe nach Anspruch 11, **dadurch gekennzeichnet, dass** die Winde eine Spillwirkung besitzt und so mehrere motorisierte Rollen umfasst, jeweils für die Übertragung eines Teils der axialen Spannung, und um welche herum, ohne vollständige Umrundung, die verlängerte Leitung mit ihrem abgeflachten oder unmittelbar nahen Querschnitt läuft.

13. Schwimmstruktur, welche die Gruppe nach einem der vorstehenden Ansprüche umfasst, die auf einer Brücke (13) der Schwimmstruktur angeordnet ist.

14. Schwimmstruktur nach Anspruch 13, **dadurch gekennzeichnet, dass**:
- die Trommel (15) um eine horizontale Achse (15a) herumdreht,
- die Trommel auf der Brücke (13) quer zur Längsachse (30) der Leitung beweglich ist und abnehmbar auf dieser Brücke montiert ist,
- und ein Kran (31) für das Umsetzen der Trommeln auf der Brücke angeordnet ist, näher einem ersten Rand der Schwimmstruktur als einem zweiten, dem ersten gegenüberliegenden Rand, von dessen Seite eine zweite drehbare Trommel, um die herum ein dritter Leitungsabschnitt gewickelt ist, über besagten Kran auf der Brücke umgesetzt werden kann.

15. Schwimmstruktur nach Anspruch 13, welche umfasst, um die besagte Leitung in das Wasser einzutauchen und sie am oder zu einem Boden (80) der Eintauchstelle hin zu halten, während diese Leitung nach und nach leer, unter Spannung, hinter der besagten Schwimmstruktur, die sich an der Oberfläche fortbewegt und mit der sie über die besagte Gruppe verbunden ist, eingetaucht wird:
- Bewegungsmittel zum Navigieren, und
- Zuführmittel (83) für Ballast (295), welche es gestatten, einen solchen Ballast dem Ballastsystem am oder zu dem besagten Eintauchboden (80) hin zuzuführen, wo ein erster Teil der Leitung und des Ballastsystems, mit dem sie verstehen ist, bereits gehalten wird von Ballast, welcher bereits in diesem ersten Teil des Ballastsystems vorhanden ist.

## Claims

1. Assembly including:
- a pipe (3) for transporting liquid, said pipe having a longitudinal axis and being
* flexible,
* deformable between a circular inner section and a flat inner section which may be zero,
* foldable on itself longitudinally and,
- a placing device at a site of the said pipe; the placing device having a longitudinal axis and comprising a drum (15) rotating around which is wound a first section of pipe,
**characterized in that**:
- the first section of pipe is wound around the drum (15) in a flattened state of its section, following a flattened ribbon,
- and the placing device is further comprised of:
* a motorized reel (17) for unwinding the pipe,
* means of positioning (19) to position one opposite the other, in a consistent state less flattened than their section on the drum, the first section of the pipe emerges from the drum and a second portion situated downstream from the first in relation to the laying direction of the pipe
* assembly means (21, 22) for a watertight connection between the first and second pipe sections in the joined state and obtain said elongated pipe,
* and, optionally, tensioning means (23) for transmitting to the elongated pipe an axial forward tension downstream and/or a backward tension upstream.

2. Assembly according to claim 1, **characterized in that** the means (19) of positioning comprises a means of shaping the first and second sections of the pipe, this means of shaping having, upstream and downstream of the assembly means, sections which respectively increase and decrease from upstream to downstream along the longitudinal axis of the placing device, and which said first and second pipe sections follow, passing around and along these sections.

3. Assembly according to claim 1 or 2 **characterized in that**:
- the drum (15) has a width oriented perpendicularly to the longitudinal axis of the pipe, this width being greater than the half-perimeter of the pipe in a circular state of the section of the pipe,
and the pipe is wound around the drum, flat or in a state immediately close to such a flat state, not folded on itself perpendicularly to its longitudinal axis, or,
- the drum has a width oriented perpendicular to the longitudinal axis of the pipe, this width being less than the half perimeter of the pipe in a circular state of the section of the pipe, and the pipe is wound flat, folded on itself perpendicular to its longitudinal axis, around the reel.

4. Assembly according to one of the previous claims **characterized in that** the positioning means includes
- a first element (190a, 190a1, 191a2) to be accommodated on the inside of the first and second pipe sections, via their respective free ends,
- a second hollow element (190b, 190b1, 191b2) placed around the first element, so that said first and second pipe sections can be interposed, along the longitudinal axis of the pipe, between the first and second elements.

5. Assembly according to claim 4, **characterized in that** one at least of the first and second elements comprises the first and second means of propulsion (191a1, 191b1, 191a2, 191b2) located partly upstream and partly downstream of the free ends (30a, 30b), to assemble said first and second sections (3a, 3b) of the pipe, to drive the first or second pipe section (3a,3b) along the longitudinal axis of the pipe, the upstream portion (191a1, 191b1) of the first and/or second means of driving being adapted to temporarily drive the first section of pipe (3a), along to said longitudinal axis, for a predetermined distance towards the second section (3b) of the pipe, or vice versa, via said downstream portion (191a2, 191b2) towards the first section (3a) of pipe.

6. Assembly according to claim 5, **characterised in that** the second drive means are connected to the controls (63) to:
- whereas the first and second pipe sections (3a, 3b) are not yet assembled, inactivate the downstream portion (191a2, 19b2) of the first and/or second means of driving vis-à-vis the driving of the second pipe section, and,
- when the first and second sections of pipe (3a, 3b) are abutted by the assembly means (22), activate the upstream portion and/or the downstream portion (191a2, 191b2) of the first and/or the second means of driving vis-à-vis the driving of said sections of the assembled pipe.

7. Assembly according to one of claims 1 to 6, comprising a ballast system (29, 290, 295) which is immersed in water and which is linked to the means (27, 65, 67, 69) of attaching to the pipe (3) of said ballast system so that the pipe and the ballast system are not one piece.

8. The assembly according to claim 7, where:
- the ballast system includes a flexible ballast housing (291) of flexible ballasting, forming at least one tubular protrusion and suitable for containing, without mixing with the liquid to be transported, a ballast (295) with a density greater than that of seawater,
- and the housing (291) which, with the pipe (3) is submerged empty or mostly empty, for a portion at least the depth of immersion, and then ballasted by the intermediary of the input pipe (83) of said input pipe granular material fed from the surface (82) of the immersion liquid and immersed, in the tubular protrusion, tends, in a fluid with non-stationary movements, to rest on the bottom (80) of the immersed site.

9. An assembly according to one of claims 7 or 8, where the means (27) of attaching comprise a flexible link (67,69,69b) allowing a distance between the pipe and the ballast system with, depending on non-stationary movements of the immersion liquid and whereas the mass (29, 295) of the ballast system provided with its ballast keeps it essentially fixed, a possibility of oscillation of the submerged pipe in relation to the ballast system (29, 290, 295).

10. An assembly according to claim 7 or claims 7 and 9,
- where the ballast system comprises a housing (291) of flexible ballasting, suitable for containing, without mixing with the liquid to be transported, a ballast (295) of density greater than that of seawater, the housing (291) thus ballasted and immersed in a fluid having non-stationary motions tending to rest on the bottom (80) of the immersion site,
- and which comprises means (83) of inputting a granular material, as ballast, said means (83) of input having a spill opening (830) for granular material towards the bottom, or at the bottom, of the fluid (81) where the pipe is immersed, in and in contact with the housing of the ballast (291) through a duct (83) for inputting said granular material fed from the surface (82) of the immersion liquid.

11. Assembly according to one of claims 1 to 6, **characterized in that** it comprises a winch (25) for amplifying said axial tension, at least for feeding the elongated pipe, downstream of the winch, and where this this pipe passes with its inner section flattened or immediately close.

12. Assembly according to claim 11, **characterized in that** the winch has a capstan effect and thus comprises several motorized rollers, each for transmitting a portion of the axial tension, and around which passes, without a full turn, the elongated pipe with its section flattened or immediately close.

13. Floating structure comprising the assembly according to one of the preceding claims positioned on a bridge (13) of the floating structure.

14. Floating structure according to claim 13, **characterized in that**:
- the drum (15) rotates around a horizontal axis (15a),
- the drum is movable on the bridge (13), transversely to the longitudinal axis (30) of the pipe, and is removably mounted on this bridge,
- and a crane (31) for hoisting drums, is placed on the bridge, closer to a first edge of the floating structure than a second edge opposite the first near which a second rotary drum around which is wound a third pipe section can be hoisted onto the bridge via said crane.

15. A floating structure according to claim 13 which comprises, for immersing said pipe into the water, and maintaining it on or towards a bottom (80) of the immersion site, as and when the pipe is immersed empty, under tension, behind said floating structure which moves at the surface and to which it is connected by said assembly:
- moving means to navigate, and
- means (83) of ballast input (295) allowing such ballast to be provided to the ballast system on or towards said immersion base (80), where a first portion of the pipe and the ballast system of which it is provided is already maintained, by the ballast in this first portion of the ballast system.
